# EUROPÄISCHE PATENTSCHRIFT

(11) **EP 1 340 570 B1**
(45) Veröffentlichungstag und Bekanntmachung des Hinweises auf die Patenterteilung: **29.12.2004**
(21) Anmeldenummer: 02022835.9
(22) Anmeldetag: 12.10.2002
(51) Int. Cl.: B23B 31/00

(54) **Rotierendes Werkzeug mit einem Einspannschaft**
Rotating cutting tool with a clamping shaft
Outil de coupe rotatif avec une queue de serrage

(30) Priorität: 27.02.2002 DE 20203129 U
(43) Veröffentlichungstag der Anmeldung: 03.09.2003
(73) Patentinhaber: Quanz, Reiner, 42859 Remscheid (DE)
(72) Erfinder: Quanz, Reiner, 42859 Remscheid (DE)
(74) Vertreter: Patentanwälte Dr. Solf & Zapf

(56) Entgegenhaltungen:
- EP-A- 0 200 201
- WO-A-86/00247

## Beschreibung

Die vorliegende Erfindung betrifft ein rotierendes Werkzeug, insbesondere Bohrer, Fräser, Senker, Entgrater oder dergleichen spanendes Werkzeug, bestehend aus einem um eine Rotationsachse rotierend anzutreibenden, insbesondere zur spanenden Bearbeitung ausgelegten Arbeitsteil und einem sich in axialer Richtung anschließenden Einspannschaft zum Einsetzen in ein Spannfutter einer Antriebsmaschine, wobei der Einspannschaft auf seinem Außenumfang eine Anzahl n ≥ 2 von Spannflächen zur Auflage jeweils eines Spannbackens des Spannfutters aufweist, wobei sich jede Spannflächen - in einer vorbestimmten Werkzeug-Rotationsrichtung gesehen - von einem Anfangspunkt bis zu einem Endpunkt erstreckt, wobei der Einspannschaft im Bereich jeder Spannfläche einen sich zwischen dem Anfangspunkt und dem Endpunkt verändemden Schaftradius aufweist und wobei der Schaftradius im Bereich jeder Spannfläche von einem minimalen Schaftradius am Anfangspunkt über einen Anstiegswinkelbereich hinweg auf einen maximalen Schaftradius am Endpunkt ansteigt.

Bei rotierenden Werkzeugen, insbesondere bei Spiralbohrem und dergleichen, ist es zunächst bekannt, den Einspannschaft zylindrisch, d. h. im Querschnitt kreisförmig auszubilden. Dies macht ein sehr festes Spannen des zugehörigen Spannfutters erforderlich, um ein Durchrutschen des Werkzeugs mit den nachteiligen Folgen, wie Riefen- und Spanbildungen auf der Schaft- Umfangsfläche, zu vermeiden. Bei nicht genügend festem Einspannen kommt es in der Praxis sehr häufig zum Durchrutschen des Werkzeugs im Spannfutter.

Es ist daher bei bestimmten Werkzeugen weiterhin bekannt, den zunächst zylindrischen Schaft mit sekantenartigen Spannflächen zu versehen, wodurch im Falle eines Dreibackenfutters ein sogenannter Dreiflächen-Mitnehmerschaft entsteht. Da die Spannflächen aber in Umfangsrichtung recht schmal sind (Verhältnis zu den verbleibenden Zylinderflächen etwa 1 : 2 bis 1 : 3) ist es beim Einspannvorgang sehr schwierig, mit den Spannbacken genau auf die Spannflächen zu treffen. Häufig werden deshalb doch die Zylinderflächen getroffen, wodurch die gleichen Nachteile wie bei vollständig zylindrischen Einspannschäften auftreten. Zudem ist auch mit dieser Art von Einspannschaft noch ein sehr festes Spannen erforderlich, um ein unerwünschtes Lösen während der Bearbeitung zu vermeiden.

Die EP-A-0 200 201 beschreibt verschiedenartige Ausführungen von Werkzeugaufnahmen für Bohrmaschinen sowie entsprechende Bohrer. Bei den meisten Ausführungen ist ein Eingriff der Backen mit Rippen in Nuten des Bohrerschaftes beschrieben. Die Veröffentlichung beschreibt aber auch eine dem Oberbegriff des Patentanspruchs 1 entsprechende Ausführung, wobei der Bohrerschaft einen Querschnitt in Form eines Dreiecks mit konvex gekrümmten Seiten aufweist. Dabei liegt in der Mitte jeder Spannfläche ein Punkt mit minimalem Radius, wobei der Radius zu beiden Seiten hin, d. h. zum Anfang und zum Ende jeder Spannfläche hin, auf einen maximalen Radius ansteigt Es handelt sich somit um eine symmetrische Profilform, weshalb jeder Spannbacken eine angepaßte, konkave Fläche zur flächigen Anlage aufweisen muß.

Die WO 86/00247 A offenbart ausschließlich einen Eingriff von rippenartigen Backen eines Futters in Nuten eines Werkzeugschaftes.

Der vorliegenden Erfindung liegt die Aufgabe zugrunde, ein Werkzeug der genannten Art im Bereich des Einspannschaftes so zu verbessern, dass bei erleichtertem Einspannvorgang stets ein hinreichendes Einspannen zur Vermeidung eines Lösens und/oder Durchrutschens gewährleistet ist.

Erfindungsgemäß wird dies dadurch erreicht, dass zwischen dem Endpunkt jeder Spannfläche und dem Anfangspunkt der in Rotationsrichtung benachbarten Spannfläche eine radial abfallende, sich über einen Abfallwinkelbereich erstreckende Übergangsfläche gebildet ist, wobei der Anstiegswinkelbereich jeder Spannfläche größer als der Abfallwinkelbereich jeder Übergangsfläche ist.

Somit ist erfindungsgemäß jede Spannfläche in Umfangsrichtung gesehen als eine Art von Rampenfläche ausgebildet, die in der Rotationsrichtung vom Anfangspunkt bis zum Endpunkt radial ansteigt. Dadurch laufen die antreibenden Spannbacken des Spannfutters stets gegen die rampenartig ansteigenden Spannflächen, so dass auch bei einem relativ losen Spannen stets eine sichere Mitnahme des Werkzeugs erreicht wird. Die Erfindung bewirkt sogar praktisch eine automatische Selbstspannung, indem in den Anlagebereichen zwischen den Spannbacken und den Spannflächen selbsttätig eine Erhöhung des Kraftschlusses bis hin zum Kraftformschluß oder gar Formschluß erfolgt; bei geeigneter Auslegung der radial ansteigenden Spannflächen kann die Spannverbindung sogar - nach dem Prinzip einer selbsthemmenden Konusverbindung - in die Selbsthemmung laufen. Vorteilhafterweise ist dadurch auch schon bei "losem" Spannen des Futters von Hand, d. h. ohne Schlüssel, eine sichere, spielfreie, rutsch- und schlupffreie Drehmomentübertragung gewährleistet, so dass auch insofern der Spannvorgang erleichtert und beschleunigt wird, als auf das feste Spannen mittels Schlüssel in aller Regel sogar gänzlich verzichtet werden kann.

Es ist weiterhin vorteilhaft, wenn der Anstiegswinkelbereich jeder Spannfläche in Umfangsrichtung möglichst groß ist, und zwar beträgt vorzugsweise der Anstiegswinkelbereich etwa 85 % bis 95 % eines Spannschaft-Teilungswinkels α = 360°/n (mit n = Anzahl der Spannflächen = Anzahl der Spannbacken des jeweils zugehörigen Spannfutters). Durch diese vorteilhafte Ausgestaltung ist es sehr einfach, mit den Spannbacken auf die Spannflächen zu treffen, wobei es für die erfindungsgemäße, zuvor beschriebene Wirkung unerheblich ist, an welcher Stelle der radial rampenartig ansteigenden Spannflächen die Spannbacken zur Auflage gelangen, sofern sie nicht genau auf die auf dem maximalen Schaftradius liegenden Endpunkte treffen. Allerdings ist es statistisch sehr viel wahrscheinlicher, auf die ansteigenden Bereiche der Spannflächen zu treffen als genau auf deren Endpunkte.

Zwischen den Endpunkten der Spannflächen und den Anfangspunkten der jeweils benachbarten Spannfläche sind radial relativ steil abfallende Übergangsflächen gebildet, die sich in Umfangsrichtung nur über einen kurzen Abfallwinkelbereich erstrecken. Wenn beim Einspannvorgang die Spannbacken auf diese Übergangsflächen treffen sollten, so ist dies insofern unproblematisch, als beim Spannen die Backen über die relativen steilen Übergangsflächen praktisch bis zu den Anfangspunkten der Spannflächen rutschen. Damit ist jedenfalls ein sicheres Spannen gewährleistet.

Erfindungsgemäß ist der Einspannschaft somit zwar grundsätzlich für eine bestimmte Rotationsrichtung konzipiert (bei Bohrern und dergleichen spanenden Werkzeugen üblicherweise für Rechtslauf), er läßt aber durchaus auch einen gegenläufigen Antrieb zu, indem dann die Spannbacken gegen die Übergangsflächen wirken können und so eine sichere, rutschfreie Drehmitnahme gewährleisten. Von Bedeutung ist dies beispielsweise für Gewindebohrer, da diese nach dem Herstellen einer Gewindebohrung mit umgekehrter Rotationsrichtung wieder aus der Gewindebohrung zu entfernen sind.

Weitere vorteilhafte Ausgestaltungsmerkmale der Erfindung und daraus resultierende Vorteile und besondere Wirkungen sind in den Unteransprüchen sowie der folgenden Beschreibung enthalten.

Anhand eines in der Zeichnung veranschaulichten, bevorzugten Ausführungsbeispiels soll die Erfindung genauer erläutert werden. Dabei zeigen:
- Fig. 1: eine schematische, vereinfachte Seitenansicht eines erfindungsgemäßen Werkzeuges,
- Fig. 2: einen vergrößerten Querschnitt durch den erfindungsgemäßen Einspannschaft in der Ebene II - II gemäß Fig. 1 und
- Fig. 3: eine weitergehende Vergrößerung der Schnittdarstellung gemäß Fig. 2, wobei zusätzlich Spannbacken eines Spannfutters angedeutet sind.

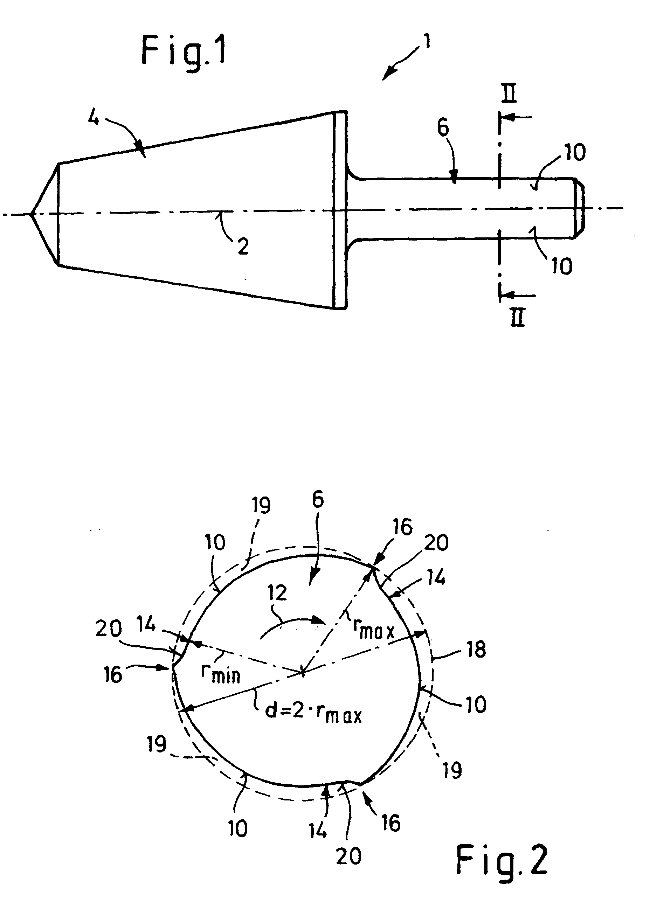

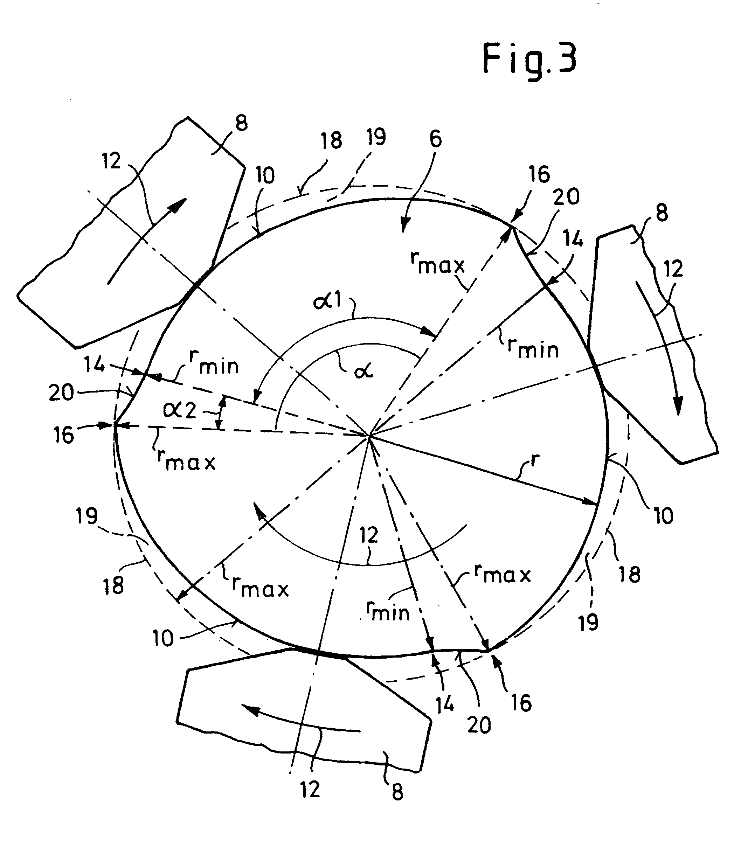

In Fig. 1 ist beispielhaft ein Werkzeug 1 veranschaulicht, welches aus einem um eine Rotationsachse 2 rotierend anzutreibenden Arbeitsteil 4 und einem sich in axialer Richtung anschließenden Einspannschaft 6 besteht. Der Arbeitsteil 4 ist insbesondere für eine spanende Bearbeitung ausgelegt, beispielsweise als Bohrer, Fräser, Senker, Entgrater oder dergleichen. In Fig. 1 ist beispielhaft eine im Wesentlichen konische Ausführung als sogenannter Schälaufbohrer veranschaulicht, es kann sich aber beispielsweise auch um einen Stufenbohrer oder eine beliebig andere Werkzeugart handeln. Der Einspannschaft 6 wird zum Drehantrieb in ein Spannfutter einer nicht dargestellten Antriebsmaschine eingesetzt. Je nach Anzahl n von Spannbacken 8 (siehe Fig. 3) des jeweiligen Spannfutters weist der Einspannschaft 6 eine entsprechende Anzahl n von Spannflächen 10 zur Auflage jeweils eines der Spannbacken 8 auf. Hierzu wird auf die Schnittdarstellungen in Fig. 2 und 3 verwiesen.

Wie sich aus den Fig. 2 und 3 weiterhin ergibt, weist erfindungsgemäß der Einspannschaft 6 im Bereich jeder Spannfläche 10 einen Schaftradius r auf, der - in einer vorbestimmten Werkzeug-Rotationsrichtung 12 gesehen - von einem minimalen Schaftradius rₘᵢₙ über einen Anstiegswinkelbereich α1 hinweg auf einen maximalen Schaftradius rₘₐₓ ansteigt. Dadurch ergibt sich für jede Spannfläche 10 ein Anfangspunkt 14 mit dem minimalen Radius rₘᵢₙ und ein Endpunkt 16 mit dem maximalen Radius rₘₐₓ. Zwischen diesen Punkten 14, 16 steigt der Schaftradius vorzugsweise derart stetig an, dass die Spannfläche 10 im Querschnitt konvex gekrümmt ist. Die auf dem maximalen Radius rₘₐₓ liegenden Endpunkte 16 definieren einen gestrichelt eingezeichneten Umkreis 18. Die Spannflächen 10 verlaufen jeweils vom Anfangspunkt 14 über den Anstiegswinkelbereich α1 hinweg stetig bis zu dem Umkreis 18 im Endpunkt 16, so dass sich zwischen den Spannflächen 10 und dem gedachten, imaginären Umkreis 18 "Spalte" 19 ergeben, die sich in Rotationsrichtung 12 sichelförmig verjüngen.

Zwischen dem Endpunkt 16 jeder Spannfläche 10 und dem Anfangspunkt 14 der in Rotationsrichtung 12 benachbarten Spannfläche 10 ist jeweils eine radial entsprechend abfallende Übergangsfläche 20 gebildet. Diese Übergangsflächen 20 erstrecken sich jeweils über einen Abfallwinkelbereich α2. Vorzugsweise fällt der Schaftradius r im Bereich jeder Übergangsfläche 20 derart stetig ab, dass die Übergangsfläche 20 im Querschnitt konkav gekrümmt ist, wobei vorzugsweise ein Wendepunkt zwischen der konkav gekrümmten Übergangsfläche 20 und der sich stetig anschließenden, konvex gekrümmten Spannfläche 10 etwa mit deren Anfangspunkt 14 zusammenfällt.

In Abhängigkeit von der Anzahl n der Spannbacken 8 des jeweiligen Spannfutters ergibt sich ein Spannschaft-Teilungswinkel α = 360°/n. Bei der dargestellten Ausführung ist der Einspannschaft 6 beispielhaft für ein Dreibackenfutter konzipiert, so dass der Teilungswinkel α = 360°/3 = 120° beträgt.

In weiterer bevorzugter Ausgestaltung beträgt dabei der Anstiegswinkelbereich α1 jeder Spannfläche 10 etwa 85 % bis 95 %, insbesondere etwa 90 %, des Teilungswinkels α. Folglich liegt der Abfallwinkelbereich α2 jeder Übergangsfläche 20 etwa in der Größenordnung von 5 % bis 15 %, insbesondere bei etwa 10 %, des Teilungswinkels α. Daraus resultiert ein Verhältnis α2 : α1 von etwa 1 : 7 bis 1 : 11, insbesondere etwa 1 : 10.

Weiterhin ist es vorteilhaft, wenn die Differenz rₘₐₓ - rₘᵢₙ des maximalen und minimalen Schaftradius etwa 2 % bis 8 % des Durchmessers d (siehe Fig. 2) des von den Endpunkten 16 der Spannflächen 10 definierten Umkreises 18 beträgt. Da d = 2 · rₘₐₓ ist, ist die Differenz rₘₐₓ - rₘᵢₙ etwa 4 % bis 6 % von rₘₐₓ. Beträgt beispielsweise der Umkreis-Durchmesser ("Nennschaft- bzw. Nennspanndurchmesser") d = 10 mm, so ergibt sich für die Radiendifferenz rₘₐₓ - rₘᵢₙ eine Größenordnung von etwa 2/10 bis 3/10 mm.

Der Vollständigkeit halber sei erwähnt, dass die Spannflächen 10 und vorzugsweise auch die Übergangsflächen 20 jeweils axial parallel zur Rotationsachse 2 verlaufen, wodurch auch in axialer Richtung eine gute, großflächige Auflage der Spannbacken 8 auf den Spannflächen 10 gewährleistet ist.

Wie sich anhand der Darstellung in Fig. 3 gut nachvollziehen läßt, laufen die Spannbacken 8 bei Bewegung in Rotationsrichtung 12 stets gegen die radial ansteigenden Spannflächen 10, wodurch eine sehr sichere Drehmoment-Übertragung gewährleistet ist. Darüber hinaus ist sogar auch eine umgekehrte Drehmitnahme möglich, indem dann bei Bewegung der Spannbacken 8 in entgegengesetzter Drehrichtung eine sichere Drehmitnahme durch Anlage an den Übergangsflächen 20 gewährleistet ist. Es ist weiterhin einsichtig, dass beim Einspannvorgang die Spannbacken 8 mit überwiegender Wahrscheinlichkeit genau auf den Bereich der Spannflächen 10 treffen. Im Falle eines Auftreffens auf die Übergangsflächen 20 rutschen die Spannbacken 8 selbsttätig über die recht steilen Übergangsflächen 20 bis in die Anfangspunkte 14 der Spannflächen 10. Die Wahrscheinlichkeit des Auftreffens der Spannbacken 8 genau in den Endpunkten 16 ist als sehr gering anzunehmen. Dieser Fall kann daher im Grunde vernachlässigt werden. Dafür spricht auch die Tatsache, dass der Anwender beim Einspannvorgang stets das Werkzeug 1 mit dem Einspannschaft 6 innerhalb des Spannfutters etwas bewegt, weshalb es sehr unwahrscheinlich ist, dass das Spannen letztendlich genau in den Endpunkten 16 erfolgt.

Die Erfindung ist nicht auf das konkret dargestellte und beschriebene Ausführungsbeispiel beschränkt, sondern umfaßt alle unter den Wortlant der nachstehenden Patentansprüche fallenden Ausführungen. So sei vor allem nochmals erwähnt, dass auch eine Ausführung für Zwei-, Vier- oder Mehrbackenfutter möglich ist.

## Patentansprüche

1. Rotierendes Werkzeug (1), insbesondere Bohrer, Fräser, Senker, Entgrater oder dergleichen, bestehend aus einem um eine Rotationsachse (2) rotierend anzutreibenden, insbesondere zur spanenden Bearbeitung ausgelegten Arbeitsteil (4) und einem sich in axialer Richtung anschließenden Einspannschaft (6) zum Einsetzen in ein Spannfutter einer Antriebsmaschine, wobei der Einspannschaft (6) auf seinem Außenumfang eine Anzahl n ≥ 2 von Spannflächen (10) zur Auflage jeweils eines Spannbackens (8) des Spannfutters aufweist, wobei sich jede Spannfläche (10) - in einer vorbestimmten Werkzeug-Rotationsrichtung (12) gesehen - von einem Anfangspunkt (14) bis zu einem Endpunkt (16) erstreckt, wobei der Einspannschaft (6) im Bereich jeder Spannfläche (10) einen sich zwischen dem Anfangspunkt (14) und dem Endpunkt (16) verändernden Schaftradius (r) aufweist, wobei der Schaftradius (6) im Bereich jeder Spannfläche (10) von einem minimalen Schaftradius (rₘᵢₙ) am Anfangspunkt (14) über einen Anstiegswinkelbereich (α1) hinweg auf einen maximalen Schaftradius (rₘₐₓ) am Endpunkt (16) ansteigt, **dadurch gekennzeichnet, dass** zwischen dem Endpunkt (16) jeder Spannfläche (10) und dem Anfangspunkt (14) der in Rotationsrichtung (12) benachbarten Spannfläche (10) eine radial abfallende, sich über einen Abfallwinkelbereich (α2) erstreckende Übergangsfläche (20) gebildet ist, wobei der Anstiegswinkelbereich (α1) jeder Spannfläche (10) größer als der Abfallwinkelbereich (α2) jeder Übergangsfläche (20) ist.

2. Werkzeug nach Anspruch 1,
**dadurch gekennzeichnet, dass** der Schaftradius (r) zwischen dem Anfangspunkt (14) und dem Endpunkt (16) jeder Spannfläche (10) derart stetig ansteigt, dass die Spannfläche (10) im Querschnitt konvex gekrümmt ist.

3. Werkzeug nach Anspruch 1 oder 2,
**dadurch gekennzeichnet, dass** im Bereich jeder Übergangsfläche (20) der Schaftradius (r) derart stetig abfällt, dass die Übergangsfläche (20) im Querschnitt konkav gekrümmt ist und insbesondere ein Wendepunkt zwischen der konkav gekrümmten Übergangsfläche (20) und der sich stetig anschließenden konvex gekrümmten Spannfläche (10) etwa mit deren Anfangspunkt (14) zusammenfällt.

4. Werkzeug nach einem der Ansprüche 1 bis 3,
**dadurch gekennzeichnet, dass** der Anstiegswinkelbereich (α1) jeder Spannfläche (10) etwa 85 % bis 95 %, insbesondere etwa 90 %, eines Spannschaft-Teilungswinkels α = 360°/n beträgt.

5. Werkzeug nach einem der Ansprüche 1 bis 4,
**dadurch gekennzeichnet, dass** die Differenz (rₘₐₓ - rₘᵢₙ) des maximalen und minimalen Schaftradius etwa 2 % bis 8 % des Durchmessers (d) eines von den Endpunkten (16) der Spannfläche (10) definierten Umkreises (18) beträgt.

6. Werkzeug nach einem der Ansprüche 1 bis 5,
**dadurch gekennzeichnet, dass** die Anzahl n der Spannflächen (10) gleich der Anzahl der Spannbacken (8) des jeweils zugehörigen Spannfutters ist.

7. Werkzeug nach einem der Ansprüche 1 bis 6,
**dadurch gekennzeichnet, dass** die Spannflächen (10) und vorzugsweise die Übergangsflächen (20) jeweils axial parallel zur Rotationsachse (2) verlaufen.

## Claims

1. Rotating tool (1), in particular a drill, milling cutter, countersink, deburrer or the like, consisting of a working part (4) to be driven in rotation about an axis of rotation (2) and designed, in particular, for cutting machining and of an axially adjoining clamping shank (6) for insertion into a clamping chuck of a drive machine, the clamping shank (6) having, on its outer circumference, a number n ≥ 2 of clamping surfaces (10) for supporting a clamping jaw (8) of the clamping chuck in each case, each clamping surface (10), as seen in a predetermined direction of rotation (12) of the tool, extending from a starting point (14) to an end point (16), the clamping shank (6) having, in the region of each clamping surface (10), a shank radius (r) which changes between the starting point (14) and the end point (16), the shank radius (rₘᵢₙ) in the region of each clamping surface (10) rising from a minimum shank radius (rₘᵢₙ) at the starting point (14) over a range of angle of rise (α1) to a maximum shank radius (rₘₐₓ) at the end point, **characterized in that** a transitional surface (20) which is radially falling and extends over a range of angle of fall (α2) is formed between the end point (16) of each clamping surface (10) and the starting point (14) of the clamping surface (10) which is adjacent in the direction of rotation (12), the range of angle of rise (α1) of each clamping surface (10) being greater than the range of angle of fall (α2) of each transitional surface (20).

2. Tool according to Claim 1, wherein the shank radius (r) between the starting point (14) and the end point (16) of each clamping surface (10) rises continuously in such a way that the clamping surface (10) is curved convexly in cross section.

3. Tool according to Claim 1 or 2, **characterized in that**, in the region of each transitional surface (20), the shank radius (r) falls continuously in such a way that the transitional surface (20) is curved concavely in cross section, and, in particular, a turning point between the concavely curved transitional surface (20) and the continuously adjoining convexly curved clamping surface (10) coincides approximately with the starting point (14) of the latter.

4. Tool according to one of Claims 1 to 3, **characterized in that** the range of angle of rise (α1) of each clamping surface (10) is about 85% to 95%, in particular about 90%, of a clamping shank division angle α = 360°/n.

5. Tool according to one of Claims 1 to 4, **characterized in that** the difference (rₘₐₓ - rₘᵢₙ) of the maximum and the minimum shank radius is about 2% to 8% of the diameter (d) of a circumcircle (18) defined by the end points (16) of the clamping surface (10).

6. Tool according to one of Claims 1 to 5, **characterized in that** the number n of clamping surfaces (10) is equal to the number of clamping jaws (8) of the respectively associated clamping chuck.

7. Tool according to one of Claims 1 to 6, **characterized in that** the clamping surfaces (10) and preferably the transitional surfaces (20) run in each case axially parallel to the axis of rotation (2).

## Revendications

1. Outil rotatif (1), en particulier foret, fraise, fraise conique, ébarbeur ou similaire, comprenant une pièce de travail (4) à entraîner de manière rotative autour d'un axe de rotation (2), conçue en particulier pour l'usinage par enlèvement de copeaux, et une tige de serrage (6) lui faisant suite dans la direction axiale, destinée à la mise en place dans un mandrin d'une machine d'entraînement, la tige de serrage (6) présentant sur sa périphérie extérieure un nombre n ≥ 2 de surfaces de serrage (10), chacune pour le contact d'une mâchoire de serrage (8) du mandrin, chaque surface de serrage (10) s'étendant d'un point initial (14) à un point d'extrémité (16), quand on regarde dans une direction de rotation de l'outil prédéterminée (12), la tige de serrage (6) présentant, dans la zone de chaque surface de serrage (10), un rayon de tige (r) variant entre le point initial (14) et le point d'extrémité (16), le rayon de la tige (6) augmentant dans la zone de chaque surface de serrage (10) à partir d'un rayon de tige minimal (rₘᵢₙ) au point initial (14) jusqu'à un rayon de tige maximal (rₘₐₓ) au point d'extrémité (16) en passant par une zone angulaire croissante (α1), **caractérisé en ce que**, entre le point d'extrémité (16) de chaque surface de serrage (10) et le point initial (14) de la surface de serrage (10) voisine dans la direction de rotation (12), une surface de transition (20) décroissant dans le sens radial, s'étendant sur une zone angulaire décroissante (α2) est formée, la zone angulaire croissante (α1) de chaque surface de serrage (10) étant plus grande que la zone angulaire décroissante (α2) de chaque surface de transition (20).

2. Outil selon la revendication 1, **caractérisé en ce que** le rayon de tige (r) augmente en continu entre le point initial (14) et le point d'extrémité (16) de chaque surface de serrage (10) de façon à ce que la surface de serrage (10) vue en coupe transversale soit courbe de manière convexe.

3. Outil selon la revendication 1 ou 2, **caractérisé en ce que** le rayon de tige (r) diminue en continu dans la zone de chaque surface de transition (20) de façon à ce que la surface de transition (20) vue en coupe soit courbe de façon concave et qu'en particulier un point de retour entre la surface de transition courbe de manière concave (20) et la surfacé de serrage lui faisant suite en continu, courbe de manière convexe (10), coïncide à peu près avec son point initial (14).

4. Outil selon l'une des revendications 1 à 3, **caractérisé en ce que** la zone angulaire croissante (α1) de chaque surface de serrage (10) est égale à environ 85 à 95%, en particulier à environ 90%, d'un pas angulaire de tige de serrage α = 360°/n.

5. Outil selon l'une des revendications 1 à 4, **caractérisé en ce que** la différence (rₘₐₓ - rₘᵢₙ) entre le rayon de tige maximal et minimal est égale à environ 2% à 8% du diamètre (d) d'un cercle circonscrit (18) défini par les points d'extrémité (16) de la surface de serrage (10).

6. Outil selon l'une des revendications 1 à 5, **caractérisé en ce que** le nombre n des surfaces de serrage (10) est égal au nombre des mâchoires de serrage (8) du mandrin associé.

7. Outil selon l'une des revendications 1 à 6, **caractérisé en ce que** les surfaces de serrage (10) et de préférence les surfaces de transition (20) s'étendent chacune axialement parallèlement à l'axe de rotation (2).
